Europäisches Patentamt

(19) European Patent Office

Office européen des brevets

(11) Publication number: **0 287 289 B1**

(12) # EUROPEAN PATENT SPECIFICATION

(45) Date of publication of patent specification :
04.12.91 Bulletin 91/49

(51) Int. Cl.⁵ : **F16K 15/02, F16K 31/363**

(21) Application number: **88303156.9**

(22) Date of filing : **08.04.88**

(54) Valve member and valve assembly for fluid flow control.

(30) Priority : **15.04.87 GB 8709039**

(43) Date of publication of application :
**19.10.88 Bulletin 88/42**

(45) Publication of the grant of the patent :
**04.12.91 Bulletin 91/49**

(84) Designated Contracting States :
**DE ES FR GB IT**

(56) References cited :
**FR-A- 642 917**
**US-A- 2 994 340**
**US-A- 3 027 913**

(56) References cited :
**US-A- 3 029 835**
**US-A- 3 153 423**
**US-A- 3 590 851**
**US-A- 3 872 884**

(73) Proprietor : **AQUA HYDRAULICS LIMITED**
**Star Trading Estate Partridge Green**
**Horsham Sussex RH13 9RA (GB)**

(72) Inventor : **Leeson, Timothy Francis**
**"Two Hoots" Horsham Road Five Oaks**
**Billingshurst West Sussex RH14 9AR (GB)**

(74) Representative : **Long, Edward Anthony et al**
**Hulse & Co. Cavendish Buildings West Street**
**Sheffield S1 1ZZ (GB)**

## Description

This invention relates to a valve member and to a valve assembly incorporating such a valve member, for fluid flow control, suitable for example in a suction or outlet valve assembly of a positive displacement piston pump, or alternatively in a non-return valve assembly e.g., of a pipe line, with the valve head being spring-loaded into a closed position and linearly displaceable, under the action of fluid pressure, from its associated valve seat, with the maximum opening, or lift, being determined by a stop.

It is known in one valve assembly to provide the valve head with flutes serving for both centralising and guiding the valve with respect to a bore in a valve body, in which bore the valve head is slidably located, but such flutes restrict the fluid flow path through the valve throat e.g. by 40%, while furthermore, the guidance effect is reduced with valve lift. Of course, the alternative of external guidance may be employed, in which case the overlap, for valve member guidance, remains constant irrespective of the lift, but to obtain the length of flute necessary, there must be a considerable increase in the overall weight and hence cost of the valve head. This is particularly disadvantageous when a piston pump is involved, due to the high speed and frequency of operation, because the inertia effect of the valve mass damages both the valve seat and the stop.

Furthermore, with a valve assembly having a coil compression spring to load the valve head against a valve seat, both erosion and side loading can present serious problems if the fluid is forced between the spring coils, as well as restricting the spring design.

The features defined in the first part of claim 1 and 5 respectively are known from US-A-3029835.

According to a first aspect of the present invention as defined in claim 1, there is provided a valve member comprising a generally cylindrical, hollow cage having an external periphery of curvature corresponding to that of a circular section bore of a valve body in which the cage is adapted to be located, in use, as a readily displaceable, slide fit, with the cage having an upstream end adapted, in use, to be located adjacent an annular valve seat, and a downstream end ; a circular, metallic valve head carried coaxially by, and at, the upstream cage end, with a leading, annular sealing face of the valve head, adapted, in use, to make sealing contact with said annular valve seat under the bias of a coil compression spring, and projecting beyond the upstream cage end and being of smaller diameter than the cage ; said cage having a plurality of axially extending fingers, each having an arcuate periphery also of curvature corresponding to that of the bore, at least some of which fingers are interconnected adjacent the upstream cage end by a transverse member extending across the cage, with apertures between adjacent fingers to provide a fluid flow path, when the valve is open, from the valve seat to the hollow interior of the cage, the cage incorporating three fingers, spaced 120° apart, so that the transverse member is constituted by a three spoked hub which serves as a mounting for the valve head said transverse member being provided with a trhough hole, coaxial with the longitudinal axis of the cage, whereby an integral spigot of the valve head is a push-fit within the hole, characterized in that the cage is of synthetic plastics material, and an end portion of the coil compression spring is housed in a counterbore provided at the downstream end of the cage and bears on an annular radial flange, said downstream cage end is not provided with said apertures so that the spring cannot present any obstruction to fluid flow through said apertures.

According to a second aspect of the present invention as defined in claim 5, there is also provided a fluid flow control valve assembly comprising in combination, a valve body having a fluid inlet bore and a fluid outlet aperture and a valve member housed in the valve body co-operating by reciprocable movement with a valve seat provided by a portion of the valve body, characterized in that said valve member comprises the features defined above.

The valve member in accordance with the first aspect of the invention provides a relatively lightweight guidance cage, of considerably reduced inertia compared with prior proposals and hence considerably reducing damage to the valve seat in a valve assembly of a piston pump for example, whilst the governing flow path is now the annular area exposed as the valve head lifts from its seat. The synthetic plastics material of the cage may be Delrin (Trade Mark) or similar. The metallic valve head is preferably hardened, and Monel is suitable, which combats erosion and wear on the annular sealing face of the valve head. This may be generally triangular, when viewed axially. The arrangement with three flutes provides three inlet apertures for fluid flow, when the valve head is lifted from its seat, along the valve throat, past the valve seat and into the hollow interior of the cage and, compared with prior art constructions of similarly dimensioned valve members, the valve member in accordance with the invention, particularly if exhibiting this last mentioned feature provides a substantially increased flow, and furthermore, a flow rate that is dependent upon the lift of the valve member.

It is also preferred for at least the guidance fingers, and possibly the entire cage, to be provided with circumferentially extending and axially spaced apart, balance grooves having an axial length e.g. of 5 mm, less than the valve lift, e.g. of 6 mm, the grooves providing the advantage that any debris, scale etc., that finds itself lodged between the external, circumferential periphery of a finger or the case and the valve bore will quickly be located in a groove, for ready conveyance to the hollow interior of the cage, thereby eliminating the long term presence of debris between a finger or the case and the valve bore with the attendant potential for damage, such grooves additionally ensuring that wear does not result in steps in the valve bore.

preferably, the transverse member, e.g. the spoked hub, also serves as a mounting for the valve head, by being provided with a through hole, coaxial with the longitudinal axis of the cage, whereby an integral spigot of the valve head may be a push-fit within the hole, the spigot preferably having a length greater than the valve lift.

An end portion of a coil compression spring of the valve assembly in accordance with the second aspect of the invention, may be located within the cage to bear on an annular flange located inwardly of the downstream end of the cage. Preferably, the spring diameter approximates to the cage diameter, so that at least the bulk of the fluid, upon entering the hollow cage interior via the apertures between the fingers, is directed along the centre of the spring, thus minimising, if not eliminating, side loading and erosion. This centre flow action is enhanced if in accordance with another preferred proposal, the internal diameter of the spring is equal to, or greater than the internal diameter of the cage and inner faces of the fingers.

Preferably, the valve assembly comprises a cup-shaped metallic cartridge constituting the valve body, and providing the valve bore, with an internal diameter approximating to the external cage diameter, the cartridge having said fluid inlet bore defining a valve throat diameter in an end wall, at an inner end of which bore the valve seat, which is preferably chamfered, is located. At the other end of the cartridge, a spring location plate is provided against which the other end of the coil compression spring is adapted to bear, the spring location plate having a circular locating recess for spring location purposes and also having said fluid outlet aperture. Preferably, the spring location plate is also provided with at least one, and preferably three safety orifices to avoid the possibility of the location plate constituting a valve seat should debris (which could be in the water being pumped or could be a broken off part of the valve cage) find itself within the cartridge and tend to plug the fluid outlet aperture and damage associated equipment such as a pump. Externally, the cartridge may be provided with a pair of spaced-apart, circumferential grooves, each to accommodate a sealing ring.

The two aspects of the invention will now be described in greater detail by way of example, with reference to the accompanying drawing, in which :

Figure 1 is a port sectional side elevation of both the valve member in accordance with the first aspect, and the valve assembly in accordance with the second aspect ; and

Figure 2 is a view in the direction of arrow A of a portion of Figure 1.

In the drawings, a valve member 1 in accordance with the first aspect of the invention comprises a generally cylindrical, hollow cage 2 of synthetic plastics material such as Delrin (Trade Mark) having an upstream end 3, a downstream end 4 and a longitudinal axis 5, and an arcuate periphery 6.

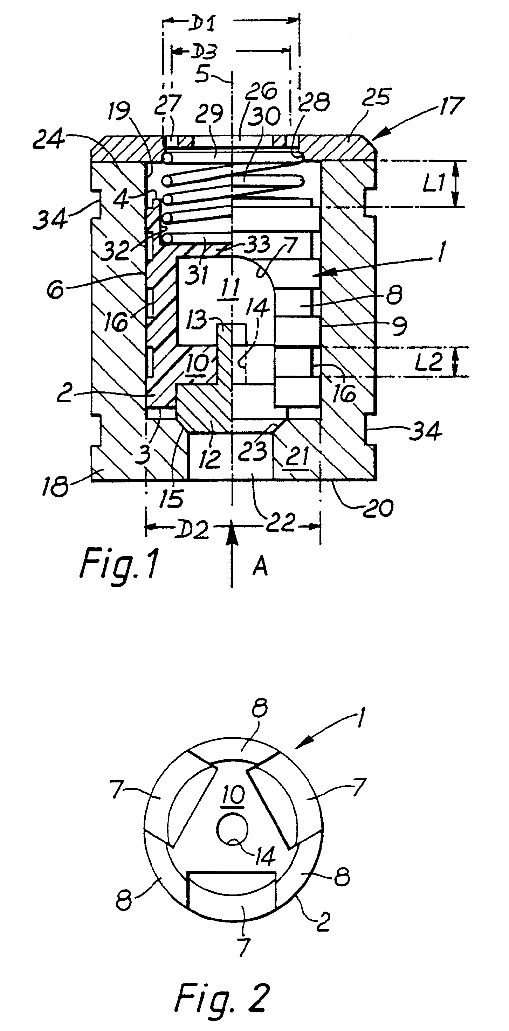

The cage 2 is provided with three inverted "U"-shaped cut-outs 7 located 120° apart to define three axially extending fingers 8 also 120° apart and having an arcuate periphery 9 inter-connected adjacent the upstream end 3 of the cage 2 by an integral transverse member 10 extending across the cage 2 and constituted as a three spoked hub with one spoke extending to each finger 8, as best seen in Figure 2 which is an end view of the cage 2 only. The cut-outs 7 provide fluid flow operatures between adjacent fingers 8 to the hollow interior 11 of the cage 2.

The valve member 1 is provided with a circular metallic valve head 12, e.g. of Monel (Trade Mark) co-axial with the cage 2 and at the upstream end 3 thereof, with an integral spigot 13 of the valve head 12 being a push-fit within a through hole 14 of the transverse member/spoked hub 10, while remote from the spigot 13, the valve head 12 is provided with a chamfered seating face 15.

Externally, the cage 2, including its fingers 7, is provided with circumferentially extending and axially spaced-apart balance grooves 16 having an axial length L2 less than the valve lift L1.

A fluid flow control valve assembly 17, in accordance with the second aspect of the invention comprises a valve member 1 housed within a cup-shaped metallic valve body 18 having an internal diameter of its circular section, cage receiving bore 19 approximating to the external diameter of the cage 2 such that the latter, in its capacity as a valve guide, is an easy sliding fit.

At an upstream or inlet end 20, the valve body 18 is provided with an end wall 21, a fluid inlet bore 22, defining the valve throat diameter, at an inner end of which bore 22 a chamfered valve seat 23 is located.

At the other downstream or outlet end 24 of the valve body 18 a spring location plate 25 is provided with a fluid outlet aperture 26 and two safety orifices 27 spaced 180° apart and is recessed at 28 to seat one end portion 29 of a coil compression spring 30, the other end portion 31 of which is housed in a counterbore 32 in the downstream end 4 of the cage 2 to bear on an annular radial flange 33 to urge the valve head 12 into seating engagement with the valve seat 23. The external periphery of the valve body 18 is circular so that the valve assembly 17 may be inserted, as a cartridge, into a valve block/pump, with circumferential grooves 34 adjacent both ends to accommodate a sealing ring. The maximum valve lift is indicated by dimension "L1" in Figure 1, which dimension L1 is greater than the axial length L2 of the individual balance grooves 16 of the valve guide cage 2, while the spigot 13 also has a length greater than the valve lift.

## Claims

1. A valve member comprising a generally cylindrical, hollow cage (2) having an external periphery of curvature corresponding to that of a circular section bore (19) of a valve body (18) in which the cage (2) is adapted to be located, in use, as a readily displaceable, slide fit, with the cage (2) having an upstream end (3) adapted, in use, to be located adjacent an annular valve seat (21), and a downstream end (4) ; a circular, metallic valve head (12) carried coaxially by, and at, the upstream cage end (3), with a leading, annular sealing face (15) of the valve head (12), adapted, in use, to make sealing contact with said annular valve seat (21) under the bias of a coil compression spring (30), and projecting beyond the upstream cage end (3), and being of smaller diameter than the cage; said cage (2) having a plurality of axially extending fingers (8), each having an arcuate periphery also of curvature corresponding to that of the bore (19), at least some of which fingers (8) are interconnected adjacent the upstream cage end (3) by a transverse member (10) extending across the cage (2), with apertures (7) between adjacent fingers (8) to provide a fluid flow path, when the valve is open, from the valve seat (21) to the hollow interior (11) of the cage (2), the cage (2) incorporating three fingers (8), spaced 120° apart, so that the transverse member (10) is constituted by a three spoked hub which serves as a mounting for the valve head (12), said transverse member (10) being provided with a through hole (14), coaxial with the longitudinal axis (5) of the cage (2), whereby an integral spigot (13) of the valve head (12) is a push-fit within the hole (14), characterized in that the cage (2) is of synthetic plastics material, and an end portion (31) of the coil compression spring (30) is housed in a counterbore (32) provided at the downstream end (4) of the cage (2) and bears on an annular radial flange (33), said downstream cage end (4) is not provided with said apertures (7) so that the spring (30) cannot present any obstruction to fluid flow through said apertures (7).

2. A valve member as claimed in Claim 1, characterized in that the fingers (8) are provided with circumferentially extending and axially spaced apart, balance grooves (16) having an axial length (L2) less than the valve lift (L1).

3. A valve member as claimed in Claim 1 or Claim 2, characterized in that the entire cage (2) is provided with circumferentially extending and axially spaced apart, balance grooves (16) having an axial length (L2) less than the valve lift (L1).

4. A valve member as claimed in Claim 3, characterized in that the spigot (13) has a length greater than the valve lift (L1).

5. A fluid flow control valve assembly comprising, in combination, a valve body (18), having a fluid inlet bore (22) and a fluid outlet aperture (26) and a valve member (1) housed in the valve body (18) cooperating by reciprocable movement with a valve seat provided by a portion of the valve body (18), characterized in that said valve member comprises the features as defined in any preceding Claim.

6. A valve assembly as claimed in Claim 5, characterized in that spring diameter (D1) approximates to the external cage diameter (D2), so that at least the bulk of the fluid, upon entering the hollow interior (11) of the cage (2) via the apertures (7) between the fingers (8), is directed along the centre of the spring (30).

7. A valve assembly as claimed in Claim 5 or Claim 6, characterized in that the internal diameter (D3) of the spring (30) is equal to or greater than, the internal diameter (D4) of the cage (2) and the fingers (8).

8. A valve assembly as claimed in any one of Claims 5 to 7, characterized in that a cup-shaped metallic cartridge constitutes the valve body (18) and provides the valve bore (19) with an internal diameter approximating to the external cage diameter (D2), the cartridge having said fluid inlet bore (22) defining a valve throat diameter in an end wall (21), at an inner end of which bore the valve seat (23), which is preferably chamfered, is located.

9. A valve assembly as claimed in Claim 8, characterized in that at the other end of the cartridge, a spring location plate (25) is provided against which the other end (29) of the coil compression spring (30) is adapted to bear, the spring location plate (25) having a circular locating recess (28) for spring location purposes, and also having said fluid outlet aperture (26).

## Patentansprüche

1. Ein Ventilelement, enthaltend einen im allgemeinen zylindrischen Hohlkäfig (2) mit einem äußeren Krümmungsumfang, der dem einer Kreisquerschnitt-Bohrung (19) eines Ventilkörpers (18) entspricht, in dem der Käfig (2) so angepaßt ist, daß er im Betrieb als leicht verschiebbarer Schiebersitz eingestellt werden kann, wobei der Käfig (2) oberhalb ein Ende (3), das so angepaßt ist, daß es im Betrieb an einem ringförmigen Ventilsitz (21) angeordnet werden kann, und unterhalb ein Ende (4) besitzt ; einen runden, metallischen, koaxial von und an dem oberen Käfigende (3) gehaltenen Ventilteller (12) mit einer stirnseitig ringförmigen Dichtungsfläche (15) des Ventiltellers (12), die so angepaßt ist, daß sie im Betrieb mit besagtem ringförmigen Ventilsitz (21) unter der Vorspannung einer über das obere Käfigende (3) hinausragenden Schraubendruckfeder (30) mit kleinerem Durchmesser als der Käfig Dichtungskontakt herstellt ; wobei besagter Käfig (2) mehrere sich axial erstreckende Finger (8) mit jeweils einem bogenförmigen Umfang, der ebenfalls dem Krümmungsumfang der Bohrung (19) entspricht, besitzt, und wenigstens einige dieser Finger (8) durch ein sich über den Käfig (2) erstreckendes Querglied (10) neben dem oberen Käfigende (3) miteinander verbunden sind, mit als Fluid-Durchflußweg vom Ventilsitz (21) zum hohlen Innenraum (11) des Käfigs (2) bei geöffnetem Ventil ausgebildeten Öffnungen (7) zwischen nebeneinander liegenden Fingern (8), der Käfig (2) mit drei inkorporierten im Abstand von 120° so angeordneten Fingern (8), daß das Querglied (10) aus einer dreispeichigen Nabe, die als Halterung für den Ventilteller (12), gebildet wird, wobei besagtes Querglied (10) mit einem koaxial mit der Längsachse (5) des Käfigs (2) verlaufenden Durchgangsloch (14) versehen ist, und ein integraler Zapfen (13) des Ventiltellers (12) innerhalb des Loches (14) einen Schiebesitz darstellt, dadurch gekennzeichnet, daß der Käfig (2) aus synthetischem Plastwerkstoff besteht, und ein Endenteil (31) der Schraubendruckfeder (30) in eine Senkung (32) am unteren Ende (4) des Käfigs (2) eingelassen ist und auf einem ringförmigen Radialflansch (33) aufliegt, wobei besagtes unteres Käfigende (4) nicht mit besagten Öffnungen (7) versehen ist, so daß die Feder (30) durch besagte Öffnungen (7) den Fluid-Durchfluß nicht behindern kann.

2. Ein Ventilelement wie in Anspruch 1 beansprucht, dadurch gekennzeichnet, daß die Finger (8) mit sich über den Umfang erstreckenden und axial auseinanderliegenden Ausgleichnuten (16), deren Axiallänge (L2) kürzer ist als der Ventilhub (L1), ausgerüstet sind.

3. Ein Ventilelement wie in Anspruch 1 oder Anspruch 2 beansprucht, dadurch gekennzeichnet, daß der gesamte Käfig (2) mit sich über den Umfang erstreckenden und axial auseinanderliegenden Ausgleichnuten (16), deren Axiallänge (L2) kürzer ist als der Ventilhub (L1), ausgerüstet ist.

4. Ein Ventilelement wie in Anspruch 3 beansprucht, dadurch gekennzeichnet, daß der Zapfen (13) länger ist als der Ventilhub (L1).

5. Ein Fluid-Durchflußregleraufbau, bestehend aus einem Ventilkörper (18) mit einer Fluid-Zuflußbohrung (22) und einer Fluid-Ausflußöffnung (26) in Kombination mit einem im Ventilkörper (18) eingeschlossenen Ventilelement (1), das mit einem durch einen Teil des Ventilkörpers (18) gebildeten Ventilsitz durch wechselseitige Bewegung zusammenwirkt, dadurch gekennzeichnet, daß besagtes Ventilelement die in jedem der vorstehend angeführten Ansprüche definierten Eigenschaften aufweist.

6. Ein Ventilaufbau wie in Anspruch 5 beansprucht, dadurch gekennzeichnet, daß der Federdurchmesser (N1) annähernd dem Käfigaußendurchmesser (D2) so entspricht, daß mindestens die Fluidmasse bei Eintritt in das hohle Innere (11) des Käfigs (2) durch die Öffnungen (7) zwischen den Fingern (8) entlang der Mitte der Feder (30) geleitet wird.

7. Ein Ventilaufbau wie in Anspruch 5 oder Anspruch 6 beansprucht, dadurch gekennzeichnet, daß der Innendurchmesser (D3) der Feder (30) gleich oder größer ist als der Innendurchmesser (D4) des Käfigs (2) und der Finger (8).

8. Ein Ventilaufbau wie in einem beliebigen der Ansprüche 5 bis 7 beansprucht, dadurch gekennzeichnet, daß eine becherförmige metallische Hülse den Ventilkörper (18) bildet und die Ventilbohrung (19) mit einem Innendurchmesser versieht, der annähernd dem Käfigaußendurchmesser (D2) entspricht, wobei besagte Fluid-Zuflußbohrung (22) in der Hülse einen Ventileinlaßdurchmesser in einer Endwand (21) definiert, und der Ventilsitz (23), der vorzugsweise abgeschrägt ist, am inneren Ende dieser Bohrung angeordnet ist.

9. Ein Ventilaufbau wie in Anspruch 8 beansprucht, dadurch gekennzeichnet, daß am anderen Ende der Hülse eine Federaufnahmeplatte (25) vorgesehen ist, gegen welche das andere Ende (29) der Schraubendruckfeder (30) zur Stützung angepaßt ist, wobei die Federaufnahmeplatte (25) mit einer runden Aufnahmevertiefung (28) für die Federaufnahme und ebenfalls mit besagter Fluid-Ausflußöffnung (26) versehen ist.

## Revendications

1. Organe de soupape, comprenant une cage creuse (2), généralement cylindrique, dotée d'une périphérie extérieure dont la courbure correspond à celle d'un alésage à section circulaire (19) d'un corps de soupape (18), dans lequel la cage (2) est adaptée pour y être logée, en utilisation, sous forme de pièce coulissante, de déplacement facile, la cage (2) comportant une extrémité amont (3) adaptée, en utilisation, pour être disposée adjacente à un siège de soupape annulaire (21), et une extrémité aval (4) ; une tête de soupape (12) métallique circulaire, portée coaxialement par, et sur l'extrémité amont (3) de la cage, avec une surface d'étanchéité annulaire avant (15) de la tête de soupape (12), adaptée, en utilisation, pour assurer un contact étanche avec ledit siège de soupape annulaire (21), sous la poussée d'un ressort hélicoïdal de pression (30), et faisant saillie au-delà de l'extrémité amont (3) de la cage, et étant d'un diamètre inférieur à celui de la cage ; ladite cage présentant une pluralité de doigts (8) s'étendant axialement, présentant chacun une périphérie arquée qui est également d'une courbure correspondant à celle de l'alésage (19), au moins quelques uns des doigts (8) étant interconnectés près de l'extrémité amont (3) de la cage, grâce à un organe transversal (10) s'étendant dans la cage (2), avec des ouvertures (7) ménagées entre des doigts (8) adjacents, pour créer une trajectoire d'écoulement du fluide, lorsque la soupape est ouverte, depuis le siège de soupape (21) jusqu'à l'intérieur creux (11) de la cage (2), cette dernière comprenant trois doigts (8), espacés les uns des autres de 120°, de telle façon que l'organe transversal (10) soit constitué par un moyeu à trois branches, qui sert de montage pour la tête de soupape (12), ledit organe transversal (10) état doté d'un trou traversant (14), coaxial par rapport à l'axe longitudinal (5) de la cage (2), de manière qu'un téton (13) faisant partie intégrante de la tête de soupape (12) soit emboîté à l'intérieur du trou (14), caractérisé en ce que la cage (2) est en matière synthétique, et qu'une' partie d'extrémité du ressort hélicoïdal de pression (30) est logée dans un contre-alésage (32) ménagé à l'extrémité aval (4) de la cage (2) et prend appui sur un rebord radial annulaire (33), ladite extrémité aval (4) de la cage n'étant pas pourvue desdites ouvertures (7), de sorte que le ressort (30) ne peut constituer aucune entrave à l'écoulement du fluide à travers lesdites ouvertures (7).

2. Organe de soupape selon la revendication 1, caractérisé en ce que les doigts (8) sont pourvus de gorges d'équilibrage (16), s'étendant circonférentiellement et espacées les unes des autres, avec une longueur axiale (L2) inférieure à la course de soulèvement (L1) de la soupape.

3. Organe de soupape selon la revendication 1 ou 2, caractérisé en ce que l'ensemble de la cage (2) est pourvu de gorges d'équilibrage (16), s'étendant circonférentiellement et espacées les unes des autres, avec une longueur axiale (L2) inférieure à la course de soulèvement (L1) de la soupape.

4. Organe de soupape selon la revendication 3, caractérisé en ce que le téton (13) présente une longueur supérieure à la course de soulèvement (L1) de la soupape.

5. Soupape de commande de débit d'un fluide, comprenant, en combinaison, un corps de soupape (18), comportant un alésage interne d'entrée de fluide (22) et une ouverture de sortie de fluide (26), et un organe de soupape (1) logé dans le corps de soupape (18), qui coopère, par un déplacement alternatif, avec un siège de soupape prévu sur une partie du corps de soupape (18), caractérisée en ce que ledit organe de soupape présente les caractéristiques définies dans l'une quelconque des revendications précédentes.

6. Soupape selon la revendication 5, caractérisée en ce que le diamètre de ressort (D1) est sensiblement égal au diamètre extérieur de la cage (D2), de sorte qu'au moins la plus grande partie du volume du fluide, lorsqu'il entre dans l'intérieur creux (11) de la cage (2), en passant par les ouvertures (7), entre les doigts (8), est dirigée au centre du ressort (30).

7. Soupape selon la revendication 5 ou 6, caractérisée en ce que le diamètre intérieur (D2) du ressort (30) est égal ou supérieur au diamètre intérieur (D4) de la cage (2) et des doigts (8).

8. Soupape selon l'une quelconque des revendications 5 à 7, caractérisée en ce qu'une cartouche métallique en forme de coupe constitue le corps de soupape (18) et délimite l'alésage de soupape (19), avec un diamètre intérieur sensiblement égal au diamètre extérieur (D2) de la cage, la cartouche comportant ledit alésage d'entrée de fluide (22) définissant un diamètre d'étranglement de soupape, dans une paroi d'extrémité (21), alésage à l'extrémité intérieure duquel est situé le siège de soupape (23), qui est de préférence chanfreiné.

9. Soupape selon la revendication 8, caractérisée en ce qu'à l'autre extrémité de la cartouche est prévue une plaque de positionnement de ressort (25), contre laquelle est destinée à prendre appui l'autre extrémité (29) du ressort hélicoïdal de pression (30), la plaque de positionnement de ressort (25) comportant une cavité de positionnement circulaire (28) pour positionner le ressort et comportant également ladite ouverture de sortie de fluide (26).

*Fig.1*

*Fig. 2*